# EUROPEAN PATENT SPECIFICATION

(11) **EP 3 887 669 B1**
(45) Date of publication and mention of the grant of the patent: **11.03.2026**
(21) Application number: 20744869.7
(22) Date of filing: 17.01.2020
(51) Int. Cl.: F03B 13/20, F03B 13/18, F03B 15/00, H02K 7/18, H02K 16/04, H02K 41/03

(54) **A VERNIER PERMANENT MAGNET LINEAR GENERATOR**
VERNIER-DAUERMAGNETLINEARGENERATOR
GÉNÉRATEUR LINÉAIRE À AIMANTS PERMANENTS VERNIER

(30) Priority: 21.01.2019 US 201916253118; 28.10.2019 US 201916666032
(43) Date of publication of application: 06.10.2021
(73) Proprietor: Dehlsen Associates, LLC, Santa Barbara, California 93101 (US)
(72) Inventor: MCCALL, Alan, L., Santa Barbara, CA 93101 (US); MCCLEER, Patrick, J., Santa Barbara, CA 93101 (US)
(74) Representative: Meissner Bolte Nürnberg
(86) International application number: PCT/US2020/013999
(87) International publication number: WO 2020/154184

(56) References cited:
- WO-A1-2015/176057
- WO-A1-2015/176057
- CN-A- 102 437 702
- GB-A- 2 486 279
- US-A- 6 020 653
- US-A1- 2004 251 692
- US-A1- 2007 075 593
- US-A1- 2008 295 509
- US-A1- 2009 066 087
- US-A1- 2013 062 889
- US-A1- 2013 127 167
- US-A1- 2017 009 732
- US-A1- 2017 009 732
- US-B1- 8 105 052
- US-B2- 10 378 507
- US-B2- 7 405 489

## Description

### BACKGROUND

### Field of the Invention:

The present invention relates to a Vernier permanent magnet linear generator, in particular for use as a power take-off of an ocean Wave Energy Converter (WEC).

### Description of the Related Art:

There is a vast resource of energy within the world's oceans. The movement of water in the world's oceans creates a vast store of kinetic energy, or energy in motion. This energy is embodied in currents, thermal gradients, or as is of principal interest of this invention, wave motion. A device capable of economically extracting the energy of ocean waves would be capable of providing a significant portion of the world's energy needs if widely deployed. Experimental devices exist and are known as Wave Energy Converters (WECs).

A WEC Power Take-off (PTO) is the means of extracting mechanical energy from the ocean and converting it into electrical energy. Such a system includes both software (controls) and hardware (gearboxes, linkages, powertrains, generators, etc.). WECs have often been equipped with relatively simple controllers, providing a mechanical damping coefficient to maximize power from the dominant wave frequency only. On the hardware side, WEC PTOs often implement hydraulics as a method of transmitting and converting linear motion induced by wave energy extraction.

Wave Energy Converters face significant technical and economic challenges because wave energy, unlike other renewables, must be collected from an extremely dynamic resource. Ocean waves are not a simple, single frequency wave, but rather the superposition of countless frequency and amplitude waves. As a result, a Wave Energy Converter must be able to extract energy efficiently from a wide frequency spectrum and change operating conditions on a second or sub-second time scale for maximum energy extraction.

Document WO 2015/176057 A1 describes a fluid flow induced oscillating energy harvester comprising a stand supporting the energy harvester and configured to support the energy harvester in a fluid flow. The fluid flow induces oscillating energy harvester further comprises at least one bluff body extending from the stand. Said bluff body is configured to be positioned substantially perpendicular to the direction of fluid flow, wherein each bluff body is mounted for movement relative to the stand at least in a direction perpendicular to the direction of fluid flow, wherein sufficient fluid flow causes an oscillating movement of the bluff body relative to the stand. Even further, the fluid flow induced oscillating energy harvester has an electrical generator coupled to at least one bluff body. It is taught that the electrical generator is configured to convert oscillating movement of the bluff body to electrical power, and that it is configured such that the rate of electrical power generation per movement of the bluff body is varied throughout a range of amplitudes of the oscillation of the bluff body. A rate of electrical power generation per movement of the bluff body of at least one amplitude of the oscillation of the bluff body is greater than a rate of electrical power generation per movement of the bluff body of at least one lower amplitude of the oscillation of the bluff body.

### SUMMARY

The invention is set forth in independent claim 1. Embodiments result from the dependent claims and the description below.

The present invention relates to a Vernier permanent magnet linear generator with a translator having a plurality of translator modules oriented in a vertical array. At least a portion of the plurality of translator modules has permanent magnets with a translator magnet pole pitch xp. Supports at lateral edges of the plurality of translator modules and a rod connected to the supports attach the translator to a driving element. The driving element reciprocating the translator in a longitudinal direction. Two stators having a slot pitch sp are supported on a reaction body oppositely spaced from the vertical array of translator modules by an air gap and offset by one half of the slot pitch sp. The stators have a slot opening so and a slot depth sd, wherein so/sp is in a range between 0.4 and 0.8. Further, the stators have three phase integral-slot stator windings with a single segment stator winding pole pitch xps magnetically interacting with a magnetic field induced by the permanent magnets. Specifically, the stators employ slot depth sd to create slot currents generating harmonic components at odd harmonics not divisible by 3.

In one implementation, Vernier permanent magnet linear generator provides a power take off for a wave energy converter with a floating body and a reaction body engaging the floating body. The reaction body is static or oscillating out of phase relative to the floating body and the floating body provides the drive element for the Vernier permanent magnet linear generator with the stator supported on the reaction body.

### BRIEF DESCRIPTION OF THE DRAWINGS

The present invention may be better understood, and its numerous features and advantages made apparent to those skilled in the art by referencing the accompanying drawings. For ease of understanding and simplicity, common numbering of elements is employed where an element is the same in different drawings.
Figure 1 is a side view of an example Wave Energy Converter incorporating an implementation of a PTO system;
Figure 2 is an example time series of a typical operating sea state;
Figure 3 is a block diagram of the PTO system integrated with an example WEC system;
Figure 4 is a block diagram of the high level controller;
Figure 5 is detailed view of the stator and translator modules forming a complete linear electric motor generator;
Figure 6 is an overall depiction of the Vernier permanent magnet linear generator structure;
Figure 7 is a detailed pictorial representation of an implementation of the Vernier permanent magnet linear generator;
Figure 8 is a side view of the Vernier permanent magnet linear generator with structural elements removed to disclose the interior elements;
Figure 9 is an expanded view of the stator and translator elements;
Figure 10 is a pictorial representation of one translator module;
Figure 11 is an end view of the translator module of Figure 10;
Figure 12 is an exploded partial view of elements of the translator module;
Figure 13 is a partially assembled view of the translator module;
Figure 14 is a pictorial representation of the translator in a partially assembled condition;
Figure 15 is an expanded view of the translator modules as supported in the finger bar elements;
Figure 16 is a pictorial representation of one stator;
Figure 17 is a side view of a stator core;
Figure 18 is a pictorial representation of the stator core;
Figure 19 is a diagram of the power electronics and stator connections; and,
Figure 20 is a drawing depicting an example physical arrangement of linear generators within a sealed housing from a top view.

### DETAILED DESCRIPTION

The following is a detailed description of illustrative implementations of the present invention. As these implementations of the present invention are described with reference to the aforementioned drawings, various modifications or adaptations of the methods and or specific structures described may become apparent to those skilled in the art. All modifications, adaptions, or variations that rely upon the teachings of the present invention, and through which these teachings have advanced the art, are considered to be within the spirit and scope of the present invention. For example, the device set forth herein has been characterized as a Wave Energy Converter Power Take-off, but it is apparent that other uses may be found for this device. Hence, these drawings and descriptions are not to be considered in a limiting sense as it is understood that the present invention is in no way limited to the implementations illustrated.

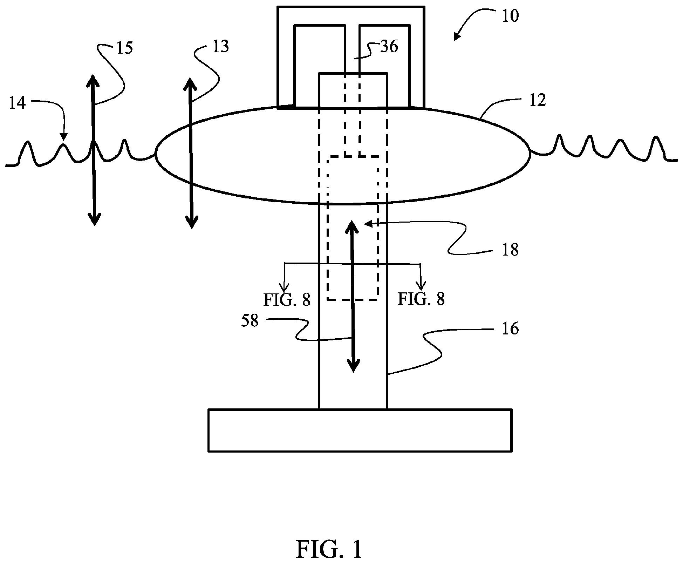

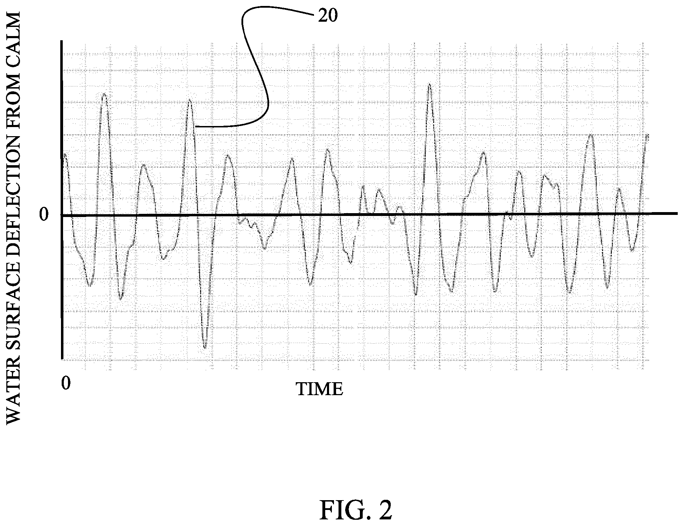

The implementations presently disclosed provide a Power Take-off (PTO) system for use in an ocean Wave Energy Converter (WEC). For purposes of illustration, an example two body WEC is presented in Figure 1. This is a point-absorber type WEC 10 with capability of extracting energy in a vertical (or heave) direction. A wave activated floating body 12 oscillates in the heave direction (as represented by arrow 13) as force (depicted by arrow 15) is imparted upon it by the waves in the ocean water depicted as element 14. An exemplary time series 20 of the motion of the water waves 14 is depicted in the graph of Figure 2. The floating body 12 is engaged by and reacts against a reaction body 16 which is either static or oscillating out of phase relative to the floating body. The forces between the two bodies are transmitted through a PTO device 18. Most WEC PTOs are either limited by a lack of optimal controls, a lack of capability in their generator and power train system, or both.

In the case of a lack of control, the high level control of the WEC does not have the sufficient formulation or information to predict and command the optimal operating state for the generator and power train system. For example, a controller that is designed to sense the dominant frequency component of a sea state and command a desired damping value for the generator does not have the capability to command the generator to optimally extract power from any frequency components other than the detected dominant frequency. Moreover, the controller may not have adequate sensor information to even be aware of the energy available in other wave frequency components. Figure 2 is presented to provide a visual understanding of a time series of a typical operating sea state containing multiple frequency components.

In the case of a lack of capability of a generator and power train system, even if the controller had perfect information relating to the optimal operating state of the generator at present and in the short-term future, the generator and power train system may not be capable to act on such information. For example, if a controller wished to command a certain generator and power train system to quickly change operating state in order to capture available energy in an upcoming higher frequency component of a wave, the generator and power train system may have excessive inertia or insufficient operating force capability to change operating state in a timely manner.

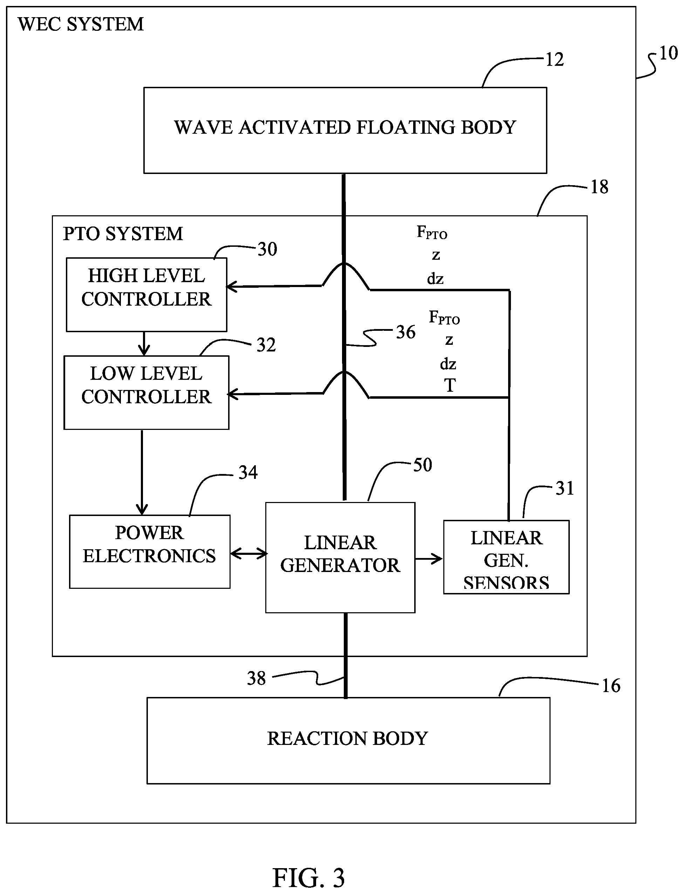

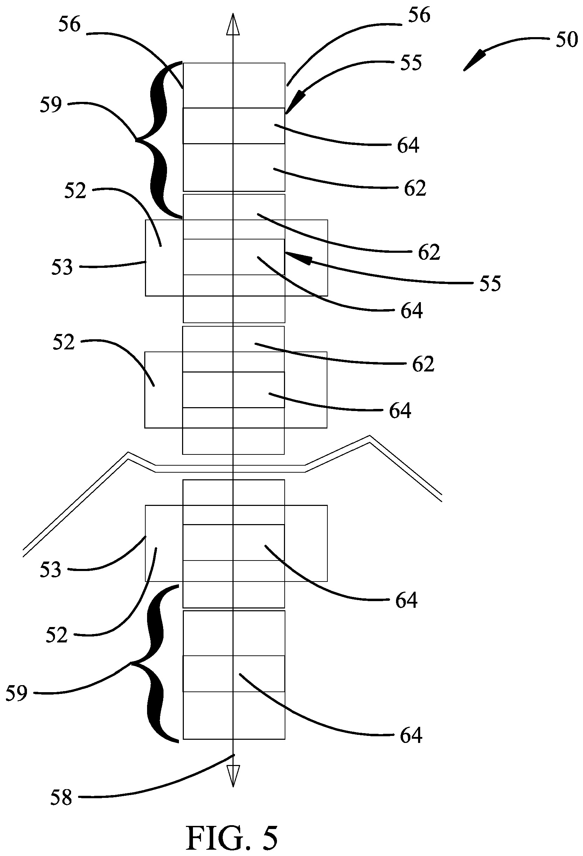

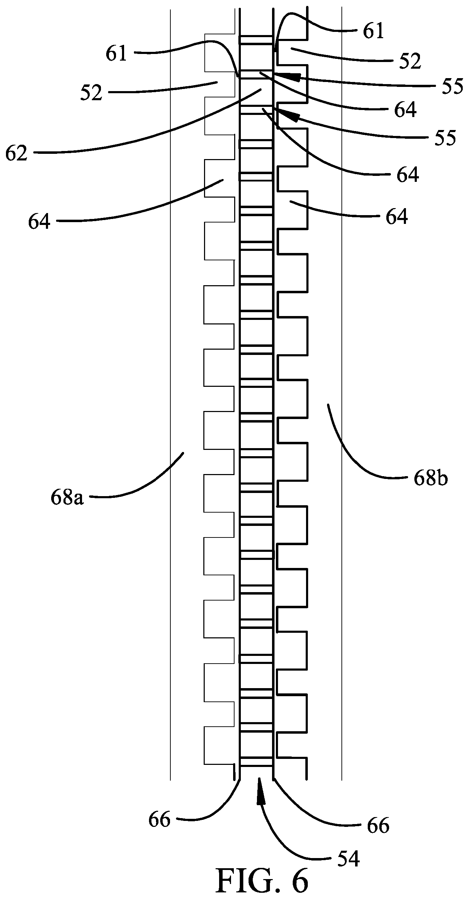

The presently disclosed implementation solves these problems by utilizing an entire, integrated Power Take-off system containing a purpose built high level control, low level control, power train, and electrical generator all working together optimally. The full system is outlined as it would be utilized in the example WEC **10** from Figure 1 in the block diagram of Figure 3. In an exemplary implementation, a direct drive linear electric generator **50** (to be described in greater detail subsequently with respect to Figures 5 and 6) is utilized in the PTO **18,** and therefore the power train and generator are consolidated into a single element with no need for a gearbox or transmission. As can be seen in Figure 3, the implementation disclosed incorporates several components, each of which will be described with their interactions with the other subcomponents outlined.

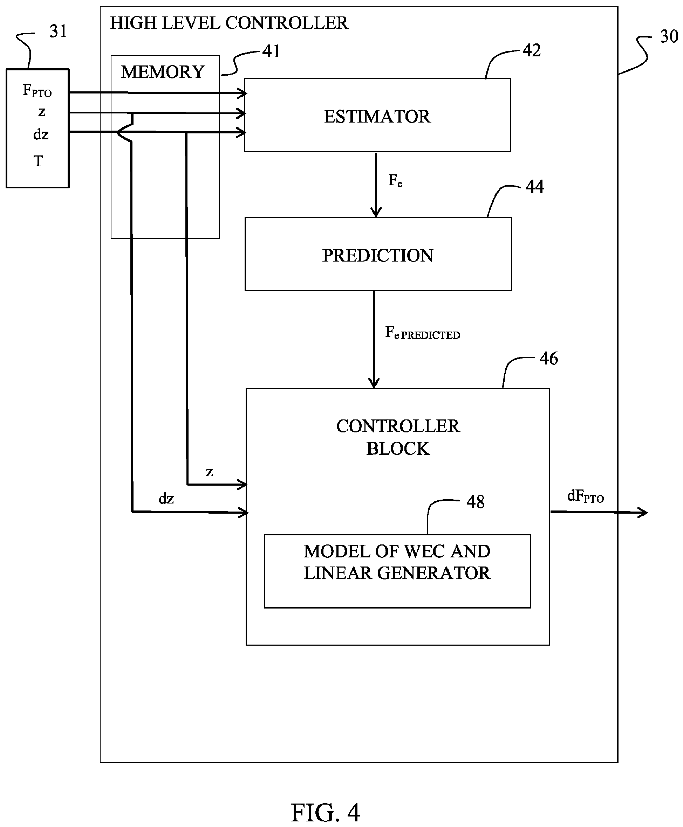

A high level controller **30,** such as a computer having either a general purpose processor or single purpose processor utilizing one or more core sections with a readable memory **41,** for processing calculation modules (which may be implemented in hardware or software subroutines). The high level controller **30** contains several modules as shown in Figure 4. Specifically, the high level controller **30** contains an estimator block **42,** a prediction block **44,** and a control block **46.** Further, the control block **46** includes a model **48** of the WEC **10** and the linear generator **50** including the mass and hydrodynamic properties of each body. One or more sensors **31** associated with the linear generator **50** transmit a signal to the high level controller **30** which includes the present force **(Fpto)** applied between the linear generator **50** and the wave activated floating body **12,** the position **(z)** of a translator **54** relative to one or more stators **52** of the linear generator **50** and the rate of change of this position **(dz).** This data is collected and stored in the computer readable memory **41** which can be accessed by the high level controller **30,** creating a data store of time indexed sensor values. While **Fpto** and **z** must be transmitted to the high level controller **30, dz** may also be calculated based on the time series data of **z.**

The estimator block **42** uses **Fpto, z**, and **dz** along with knowledge of the Wave Energy Converter's physical properties to calculate the estimated excitation force **(Fe)** impacted upon the wave activated body by the sea.

The prediction block **44** uses the time series history of **Fe** output by the estimator block **42** as an input to an auto-regressive model to calculate a prediction of future **Fe** over a specified time horizon.

Finally, the control block **46** uses the future prediction of Fe output from the prediction block **44** with the current states of **z** and **dz** as transmitted from the linear generator sensors **31,** and the numerical model **48** of the WEC and linear electric generator to predict the WEC and linear generator's response to the future excitation force imparted by the wave action the ocean water. With the ability to model the future response of the WEC given the predicted **Fe** over a certain time horizon, the control block **46** then utilizes an optimization function to select a set of change of PTO force (**dF_{PTO}**) commands over a specified time horizon to maximize electrical power extraction. The commanded **dF_{PTO}** is then sent to the low level controller **32.**

As represented in Figure 3, the low level controller **32** receives the high level controller **30** and linear generator sensors **31** outputs, and then computes and commands appropriate action from the power electronics **34** which in turn drive the linear generator **50.**

The linear generator **50** is capable of acting on the desired control commands in order to achieve optimal power extraction performance of the WEC system. The general nature of these control commands is highly variable in operational state from second to second and typically requiring high force at low speed with operation in two physical directions and operating as both a motor and a generator for a total of four quadrants of control. The linear generator 50 in the disclosed implementation is a direct drive permanent magnet linear generator which receives control commands and adapts to new operating states on a sub-second time scale. The linear generator **50** is designed as a module which can be combined in parallel or series as shown in the detailed view of Figure 5 by mechanically linking a plurality of stators **52** in series such that lateral edges **53** of the stators are flush with one-another creating a single electric machine suitable for the maximum force requirement of the specific WEC. Similarly, a translator **54** having a plurality of modules **55** is mechanically connected at lateral edges **56** of the modules to form a single mechanical body matching the length of the stators plus excess length **59** in a direction of oscillatory travel **58** which is determined to meet the desired stroke length requirement of the WEC. For the exemplary implementation, the translator **54** is connected to the wave activated floating body **12** as a driving element.

According to the invention, the linear generator **50** is a Vernier Permanent Magnet linear Generator (VPMLG). This machine, as depicted in Figure 6, is a permanent magnet synchronous electrical machine that utilizes higher order space harmonics of the magnetic field in the air gap **61** due to multiphase stator winding currents that are contained in open slots **64** at the air gap surface of the stators **52.** The translator **54** must move smoothly between the two stator surfaces, while maintaining the active air gap at a near constant value, constant to within fractions of a mm variation. The air gap length itself will have values of low order millimeters, for example between 1 and 5 mm. Standard or conventional permanent magnet synchronous machines employ only the fundamental component of the air gap magnetic field due to the slotted stator winding currents. By contrast, the present implementation has a dual stator permanent magnet linear generator, with stators **52** providing coils oppositely spaced on both sides of a central permanent magnet translator **54.** The translator **54** is formed by a stack of electrical steel laminations **62** and permanent magnets **65** forming translator modules **55** which are joined by supports **66** interconnected to the rod **36.** The permanent magnets **65** are oriented with their poles facing the direction of travel **58** rather than facing the airgap surface of the stator modules. In the exemplary implementation the poles alternate polarity orientation. The stators **52** are maintained in two separate pluralities in opposing stator supports **68a** and **68b** and are offset from one another on opposing sides by one half slot pitch. Stator supports **68a** and **68b** are supported by or rigidly connected to structure of the reaction body **16** as represented by element **38** in Figure 3. Both sets of stators **52** on the opposing stator supports **68a, 68b** utilize the common translator **54** in order to optimally engage the magnetic flux. While the translator modules **55** are shown in Figure 5 as evenly dimensioned with the stators **52** for convenience in depiction, the translator modules **55** are cyclically offset from the stators **52** as shown in Figure 6 in the exemplary implementation employing a VPMLG.

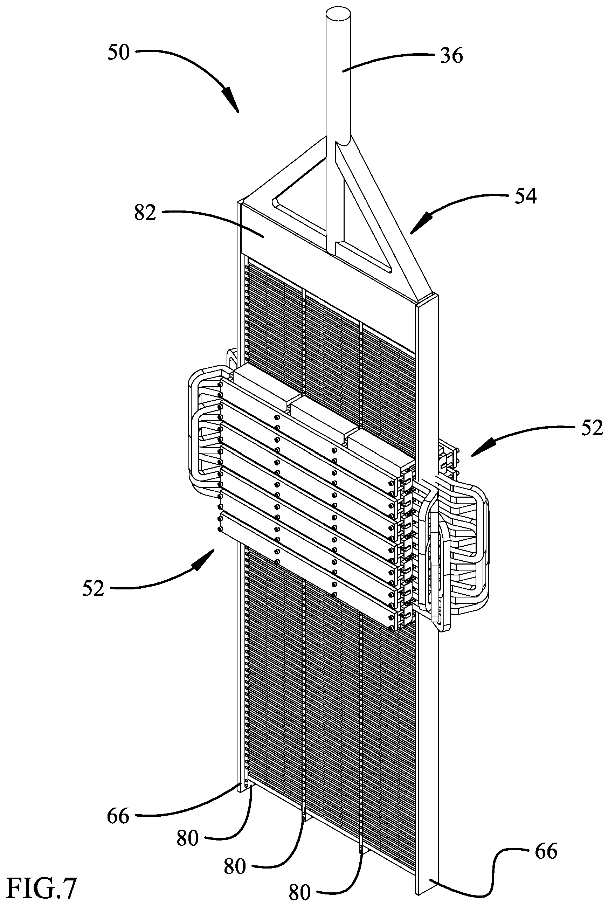

A detailed depiction of the implementation of the VPMLG is shown in Figures 7, 8 and 9. As seen in Figure 7, a cross member frame structure, constructed of non-magnetic and poorly electrically conductive stainless steel bars of sufficient cross section, is imbedded within the translator body and at the translator edges outside of the machine active air gaps. Finger bars **80** to support the plurality of translator modules **55** in a fixed vertically orientated array are provided at each end of the modules and at one or more low integer number of fixed intervals in the stack length direction, as will be described in greater detail subsequently. The supports **66** abut the outer finger bars **80** and connect through a head boss **82** to the rod **36.** All the gravitational force (due to the translator body mass) and all the longitudinal magnetic forces on the translator (due to the machine operation as a motor or a generator) will be transferred to and sustained by this frame. The total volume of the translator body, including the support frame, for this practical machine construction, would only be marginally larger than that of a similarly rated, idealized translator body with no support frame and only constructed with active magnets and laminations.

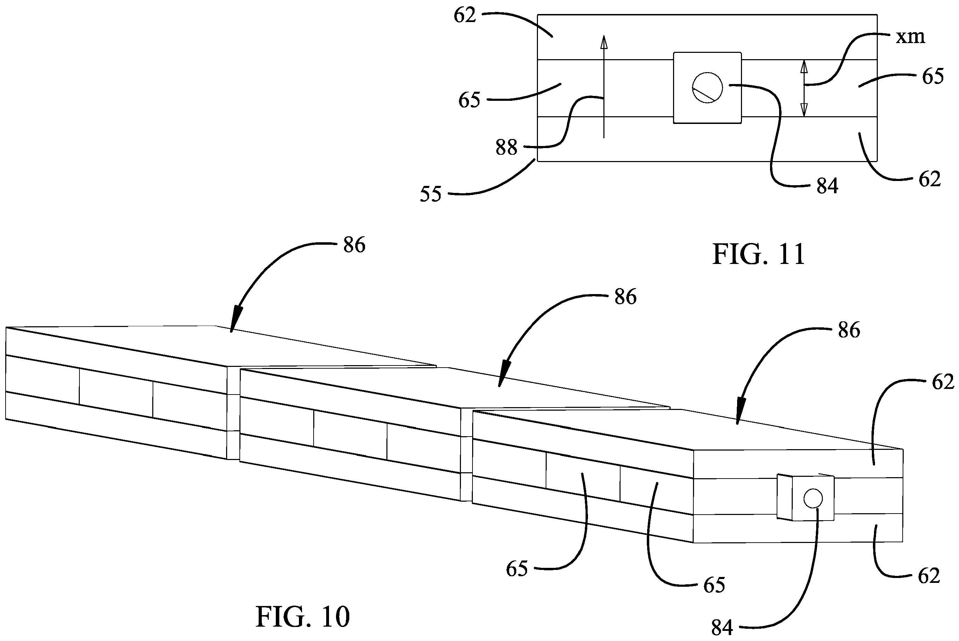

The translator modules **55** are shown in detail in Figures 10-13. A previously described, each translator module **55** in at least a portion of the plurality of translator modules incorporates electrical steel laminations **62** oppositely engaged on permanent magnets **65** to form a laminated assembly. The steel laminations **62** and permanent magnets **65** are joined on a pole bar **84** in a plurality of segments **86,** to accommodate intervening longitudinal structural supports, with a plurality of magnets **65** in each segment. The steel laminations **62** support and constrain the plurality of magnets **65** in each segment **55.** In the exemplary implementation three segments **86** are employed with six magnets **65** (three on each side of the pole bar **84)** in each segment. In alternative implementations the number of segments and number of magnets in each segment may be altered.

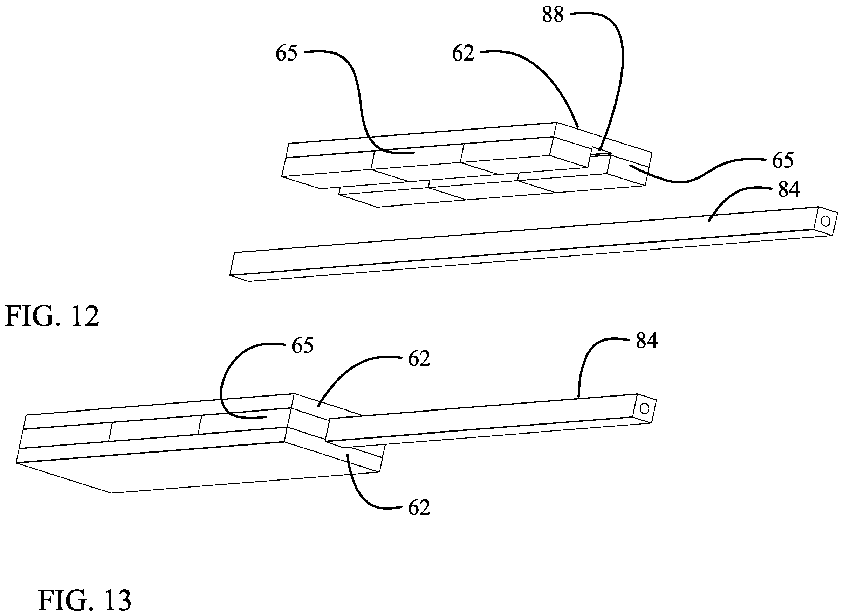

As seen in Figures 12 and 13, the three magnets **65** in each segment **86** are joined with the steel lamination **62** which may include a relief **88** sized to receive the pole bar **84** for added stability. An opposing lamination **62** is then joined on the pole bar sandwiching the magnets **65.** In the exemplary implementation the magnets **65** are adhered to the laminations **62** and pole bar **84** at abutting surfaces with an adhesive which minimizes disruption of the magnetic fields of the magnets. The magnetic poles of the magnets are oriented in the direction of travel of the translator **54** as indicated by arrow **88.** For the example implementation, the polarity alternates with each translator module.

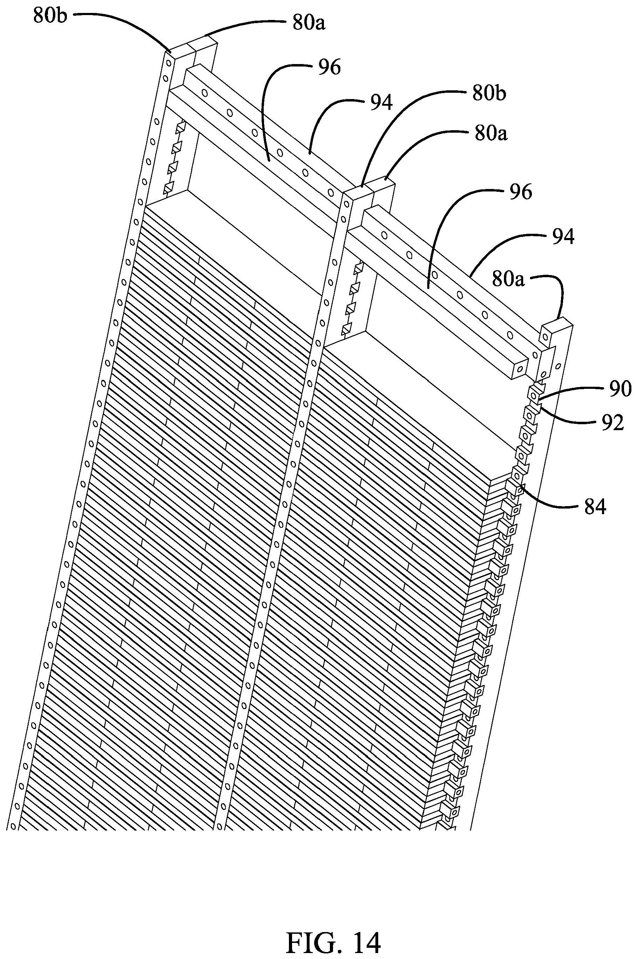

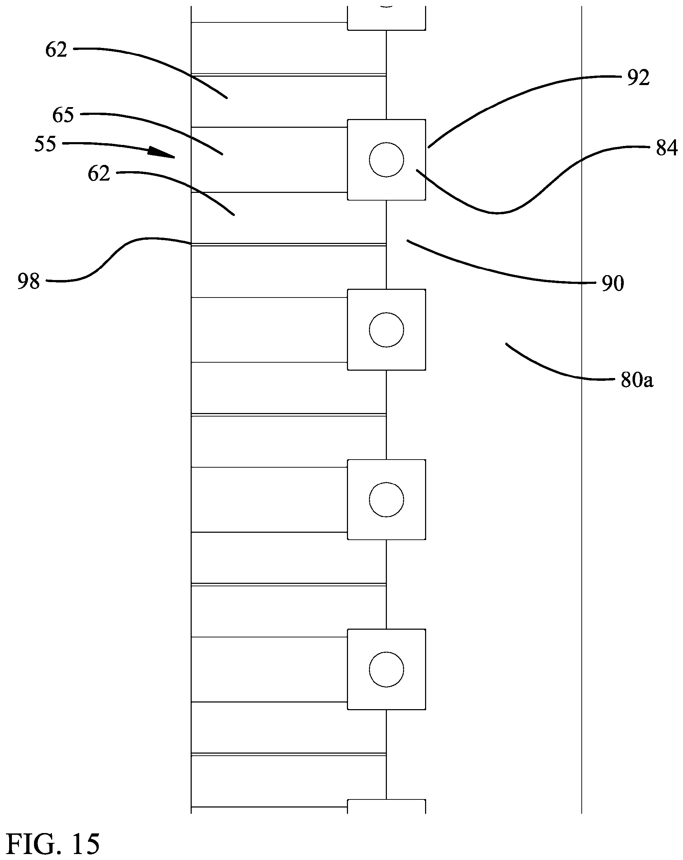

Assembly of the translator modules **55** is accomplished as shown in Figures 14 and 15. For the exemplary implementation, the pole bars **84** are quadrilateral in cross section and the finger bars **80** are split in mating halves **80a** and **80b.** The finger bar halves **80a, 80b** have alternating rectangular teeth **90** and rectangular reliefs **92.** The alternating teeth **90** engage teeth on the opposing finger bar half in joined pairs and the reliefs **92** receive the pole bars **84.** Pairs of the joined finger bar halves **80a, 80b** longitudinally and transversely support the translator modules **55** at the outer terminations of the modules and intermediate the segments of the modules. Engagement of the quadrilateral pole bars **84** in the rectangular reliefs **92** inhibits rotation of the translator modules **55.** The finger bar halves **80a, 80b** engage longitudinal end bars **94** and transverse supports **96** for enhanced rigidity of the translator **54.** As seen in the expanded side view of FIG. 15, the translator modules are supported in the finger bar halves **80a, 80b** with relief gaps **98.**

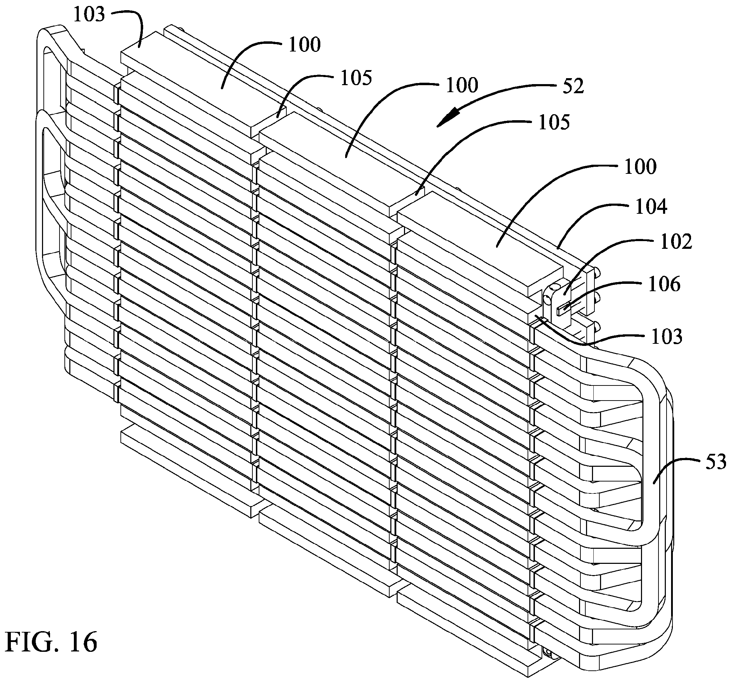

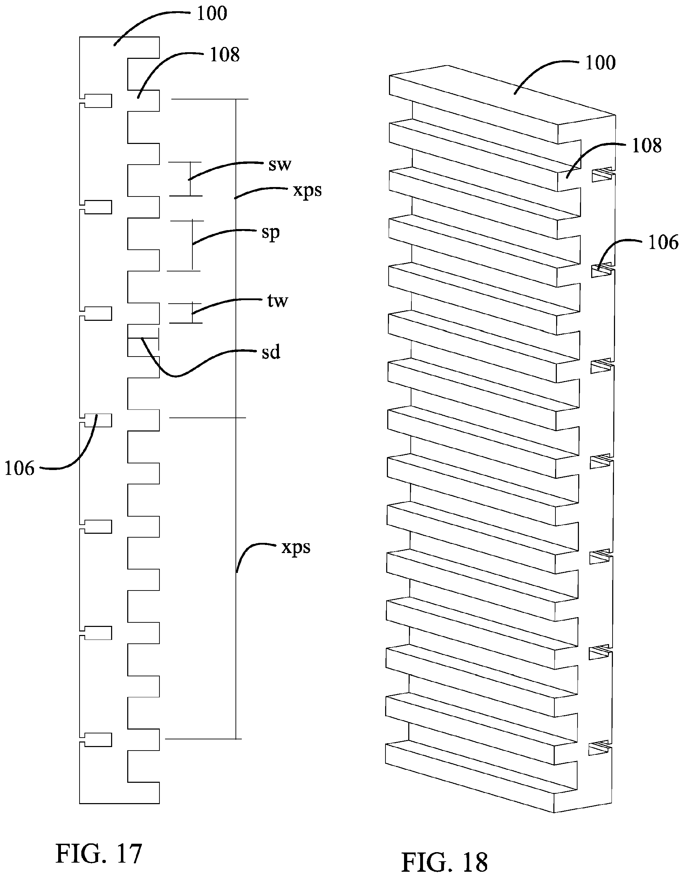

The stators **52** are described in detail with respect to Figures 16-18. The stators **52** have a plurality of core sections **100** matching the plurality of segments **86** in the translator modules **55.** The core sections **100** are supported with end plates **102** connected at the lateral edges **103** of the cores and the intermediate segment gaps **105.** Lateral support bars **104** extend laterally from the end plates **102** through channels **106** in the stator core sections **100** (seen in Figures 17 and 18). For the exemplary implementation, the end plates **102** are provided proximate each tooth **108** intermediate the open slots **64** of each core section **100.** Lateral support bars extend from every second end plates **64** vertically on the core sections **100.** The end plates **102** are engaged on a back plate **104** to provide lateral rigidity. The back plates additionally secure the stators **52** to the stator supports **68a** and **68b.**

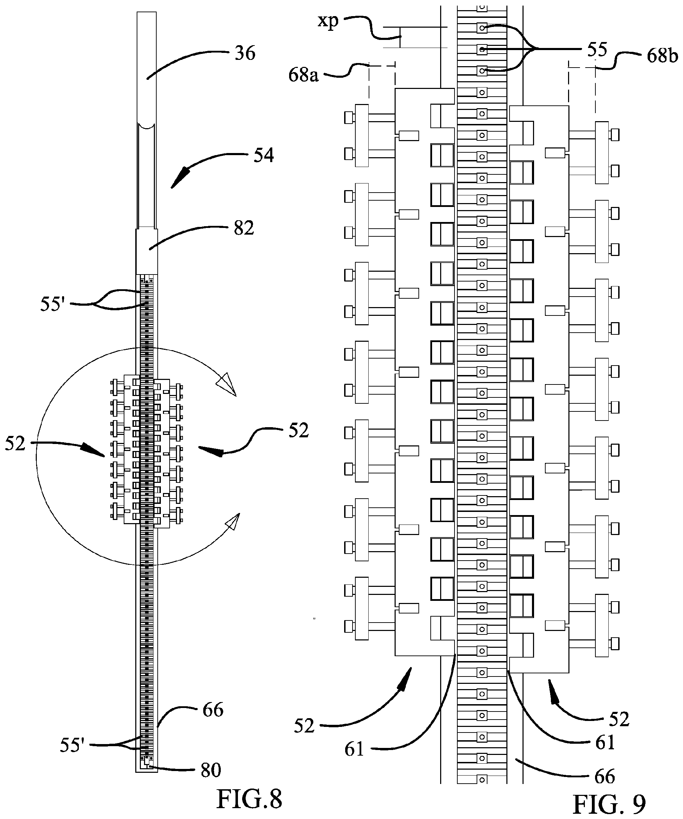

As seen in Figures 16 and 17, the exemplary implementation of the VPMLG employs a 14 slot stator, with a three phase, active (wound region) Q=2 stator slots per pole per phase stator structure (12 active slots), which employs full pitch phase windings, where Q is the value of the balanced three phase winding set number of slots per pole per phase. For the example translator, the translator magnet pole pitch is xp (seen in Figure 9) and the magnet longitudinal (magnetized direction or thickness) length is xm (seen in Figure 11). The single segment stator winding pole pitch xps is 11*xp, the active 2-pole longitudinal length of the stator **52** is then 2*xps. The full stator segment length includes two extra (unused) tooth/slot pitch lengths, one at each end of the segment, to mitigate magnetic end effects. The stator slot/tooth pitch sp is equal to xps/(3*Q)=xps/6. The open, rectangular stator slots have longitudinal width (opening) so, and depth (y-direction) sd. The uniform width of the stator teeth tw is then sp-sw. The stator coils are single layer, three phase, integral-slot stator windings, represented as elements **53** in Figure 16. These coils interact with the magnetic field induced by the translator module magnets **65.** For an exemplary implementation, pitch values of xp=32.72mm and xps=360 mm are employed providing values for proportional parameters of xm = 12.5mm, so = 36mm, sp = 60mm and tw = 24mm. In alternative implementations, the pitch values may range from 50% to 200% of the example values. According to the invention, the value so/sp is in a range between 0.4 and 0.8 but may be 0.6 in alternative implementations.

The structure of the exemplary implementation places stator winding currents in open slots of the stators **52,** with a slot opening value of **so** providing a slot fraction **sf** = **so/sp** = 0.6. The slot copper current density is dependent on the slot depth with the winding currents remaining constant. In the example implementation of the VPMLG, the specific values of slot opening so and slot depth **sd** have been determined such that the 11^{th} harmonic component Hxgc11 of the air gap magnetic field Hx is approximately five times the value of the fundamental or 1^{st} harmonic component Hxgc1. This is not an intuitive and/or expected result of the configuration. The presence of the open slots, of sufficient size, in both slot opening **so** and in slot depth **sd,** "enhances" the attainable slot harmonic component values of Hx within the machine air gap due to the stator winding currents. The invention employs slot depths to create slot currents generating harmonic components at odd harmonics not divisible by 3, such as the 13^{th} harmonic, thereby providing enhanced performance at other translator sizes or operating speeds.

In certain implementations a designated number of the translator modules **55** at each longitudinal end of the translator **54** (designated as **55'** in Figure 8) may be constructed with non-magnetic material replacing the magnets **65** in each module for a portion of the excess length **59** to provide a second portion of the plurality of translator modules. The overall length of the translator **54,** excess length **59** and number of non-magnetic translator modules 55' are then implemented to provide a longer passive stroke than active stroke of the translator **54** between the stators **52.**

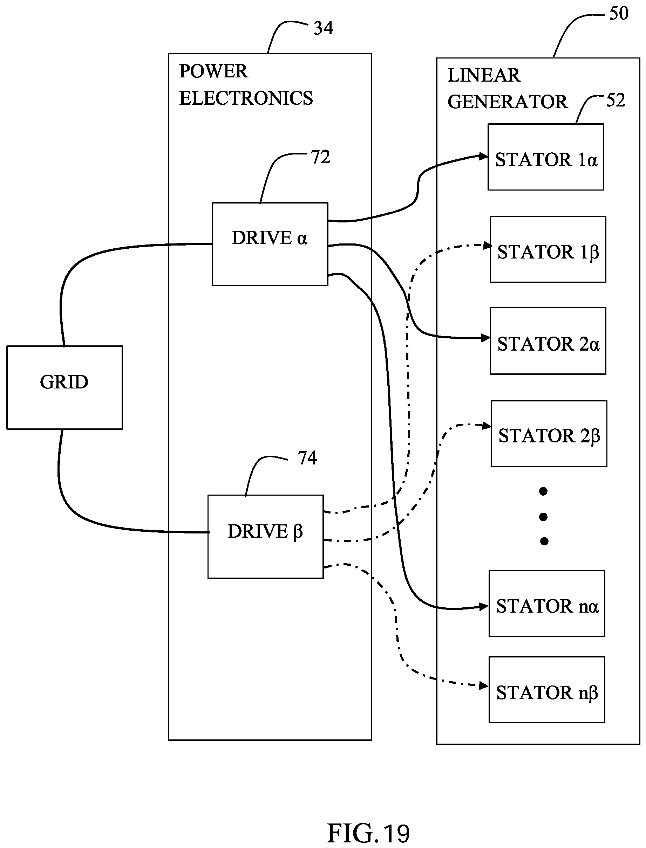

In one implementation of this invention the linear generator **50** is driven by the low level controller **32** and power electronics **34** as a single machine. In an alternate implementation the stators employed in the linear generator are driven individually or in sub-sets to achieve improved thermal operating characteristics. An example arrangement of two power electronics drives **72** and **74** operating two sets of a number of linear generator stators (identified as α and β) is depicted in Figure 19. In this arrangement the two subsets (1 α, 2 α ... n α and 1 β, 2 β ... n β) of stators **52** supported in the opposing stator supports **68a** and **68b,** can be controlled independently to drive a single translator **54** between the two stator supports. Drive α **72** is shown driving the α stators in parallel and drive β **74** is shown driving the β stators in parallel schematically in Figure 19 which may be accomplished by mechanical connection or by controlled electrical connection. Alternatively, the mechanical connection or controlled electrical connection may be employed to drive the stators **52** in series.

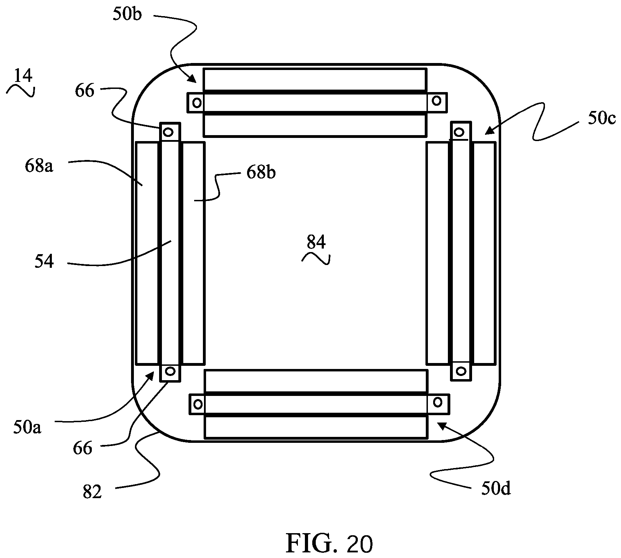

As show in Figure 20 a plurality of linear generators **50a, 50b, 50c** and **50d** may be supported within the reaction body**16**. The orientation and number of linear generators may be varied to accommodate space available within the reaction body 16 and to take advantage of various cooling scenarios for the stators. The arrangement of stators supports **68a** (outside) and **68b** (inside) in the example shown in Figure 8 would result in greater cooling capability for the outer stators that can conduct heat out to the water **14** through the housing **82** of the reaction body **16** compared to the inner stators that only have an internal volume **84** containing air with which to cool. The low level controller **32** can use a thermal sensor input, **T,** from the linear generator sensors **31** to determine how much current to apply to each of the stator sets in order to achieve to desired change in power take-off force commanded by the high level controller **30** while maintaining thermal equilibrium between the stators modules **52** on the outside and inside stator supports **62a** and **62b.** The overall result of this is an improved capability of the whole PTO system as all stators **52** are no longer limited by the stators with the poorest cooling capability.

The implementation shown in Figure 20 while shown with the translators 54 of the linear generators **50a, 50b, 50c** and **50d** mechanically connected in parallel between the floating body **12** and reaction body **16,** the linear generators may be electrically connected in parallel or in series as previously described. In certain implementations, the linear generators may be aligned and mechanically interconnected in series.

While the invention has been described with reference to specific implementations, it will be understood by those skilled in the art that various changes may be made, and equivalents may be substituted for elements thereof without departing from the scope of the invention. In addition, modifications may be made without departing from the essential teachings of the invention as defined in the following claims.

## Claims

1. A Vernier permanent magnet linear generator comprising:
a translator (50) having
a plurality of translator modules (55) oriented in a vertical array, a least a portion of said plurality of translator modules having permanent magnets with a translator magnet pole pitch xp;
supports (66) at lateral edges of the plurality of translator modules;
a rod (36) connected to the supports for attachment to a driving element (12), said driving element reciprocating the translator in a longitudinal direction;
two stators (52) supported on a reaction body (16) and having a slot pitch sp, said stators oppositely spaced from the vertical array of translator modules by an air gap (61) and offset by one half of the slot pitch sp, said stators having a slot opening so and a slot depth sd, wherein so/sp is in a range between 0.4 and 0.8, and three phase integral-slot stator windings (53) with a single segment stator winding pole pitch xps magnetically interacting with a magnetic field induced by the permanent magnets;
wherein, the stators employ slot depth sd to create slot currents generating harmonic components at odd harmonics not divisible by 3.

2. The Vernier permanent magnet linear generator as defined in claim 1 wherein the at least a portion of the plurality of translator modules each comprise electrical steel laminations (62) oppositely engaged on the permanent magnets (65).

3. The Vernier permanent magnet linear generator as defined in claim 2 wherein the steel laminations and permanent magnets are joined on a pole bar (84) in a plurality of segments with a plurality of magnets in each segment.

4. The Vernier permanent magnet linear generator as defined in claim 3 wherein the pole bar has a quadrilateral cross section and further comprising a plurality of pairs of joined opposing finger bar halves (80a, 80b) each opposing finger bar half having alternating rectangular teeth (90) and rectangular reliefs (92), the alternating teeth on one of said opposing finger bar halves engaging alternating teeth on a second of said opposing finger bar halves and the alternating rectangular reliefs receiving the pole bars, each of the pairs of joined opposing finger bar halves longitudinally and transversely supporting the translator modules at an outer termination of each translator module or intermediate the segments of the modules.

5. The Vernier permanent magnet linear generator as defined in claim 4 wherein the finger bar halves engage longitudinal end bars (94) and transverse supports (96) for enhanced rigidity of the translator.

6. The Vernier permanent magnet linear generator as defined in claim 3 wherein each of the two stators comprises a plurality of core sections (100) matching the plurality of segments in the translator modules, each core section having 12 slots with a slot width sw with a tooth intermediate each slot having a tooth width tw.

7. The Vernier permanent magnet linear generator as defined in claim 6 further comprising end plates (102) connected at lateral edges of each core section and at gaps intermediate adjacent core sections, the end plates engaged on a back plate (104) to provide lateral rigidity, the back plate securing the stators to stator supports (68a, 68b).

8. The Vernier permanent magnet linear generator as defined in claim 7 further comprising lateral support bars (104) extending laterally from the end plates through channels (106) in the stator core sections.

9. The Vernier permanent magnet linear generator as defined in claim 8 wherein the end plates are provided proximate each tooth intermediate each slot of each core section and the lateral support bars extend from every second end plate vertically on each coresection.

10. The Vernier permanent magnet linear generator as defined in claim 6 wherein an active longitudinal length of each stator is 2*xps and xps=11*xp.

11. The Vernier permanent magnet linear generator as defined in claim 10 wherein a stator slot/tooth pitch sp is defined by sp/(3 *Q)=xps/6 where Q is a value for a balanced three phase winding set number of slots per pole per phase.

12. The Vernier permanent magnet linear generator as defined in claim 1 wherein the translator has an excess length (59) at each longitudinal end beyond the stators and a second portion of the plurality of translator modules (55') at each longitudinal end of the translator have non-magnetic material replacing the magnets in each module for a portion of the excess length.

13. The Vernier permanent magnet linear generator as defined in claim 12 wherein the portion of the excess length provides a longer passive stroke than active stroke of the translator between the stators.

14. The Vernier permanent magnet linear generator as defined in claim 1 wherein the driving element comprises a floating body (12) in a wave energy converter (10) and the reaction body engages the floating body with the said reaction body static or oscillating out of phase relative to the floating body.

## Patentansprüche

1. Vernier-Permanentmagnetlineargenerator umfassend:
einen Translator (50) mit
einer Vielzahl von Translatormodulen (55), die in einer vertikalen Anordnung ausgerichtet sind, wobei mindestens ein Teil der Vielzahl von Translatormodulen Permanentmagnete mit einem Translator-Magnetpolabstand xp aufweist;
Stützen (66) an den Seitenkanten der Vielzahl von Translatormodulen;
eine Stange (36), die mit den Stützen verbunden ist, um an einem Antriebselement (12) befestigt zu werden, wobei das Antriebselement den Translator in Längsrichtung hin- und herbewegt;
zwei Statoren (52), die auf einem Reaktionskörper (16) gelagert sind und einen Schlitzabstand sp aufweisen, wobei die Statoren gegenüber der vertikalen Anordnung der Translatormodule durch einen Luftspalt (61) beabstandet und um die Hälfte des Schlitzabstands sp versetzt sind, wobei die Statoren eine Schlitzöffnung so und eine Schlitztiefe sd aufweisen, wobei so/sp in einem Bereich zwischen 0,4 und 0,8 liegt, und dreiphasige Statorwicklungen (53) mit integralen Schlitzen und einem einzigen Segment-Statorwicklungs-Polabstand xps, die magnetisch mit einem durch die Permanentmagnete induzierten Magnetfeld in Wechselwirkung stehen;
wobei die Statoren die Schlitztiefe sd nutzen, um Schlitzströme zu erzeugen, die harmonische Komponenten bei ungeraden Harmonischen erzeugen, die nicht durch 3 teilbar sind.

2. Vernier-Permanentmagnetlineargenerator wie definiert in Anspruch 1, wobei mindestens ein Teil der mehreren Translatormodule jeweils elektrische Stahlbleche (62) umfasst, die gegenüberliegend an den Permanentmagneten (65) angreifen.

3. Vernier-Permanentmagnetlineargenerator wie definiert in Anspruch 2, wobei die Stahlbleche und Permanentmagnete auf einer Polstange (84) in einer Vielzahl von Segmenten mit einer Vielzahl von Magneten in jedem Segment verbunden sind.

4. Vernier-Permanentmagnetlineargenerator wie definiert in Anspruch 3, wobei die Polstange einen viereckigen Querschnitt aufweist und ferner mehrere Paare verbundener gegenüberliegender Fingerstangenhälften (80a, 80b) umfasst, wobei jede gegenüberliegende Fingerstangenhälfte abwechselnd rechteckige Zähne (90) und rechteckige Aussparungen (92) aufweist, wobei die abwechselnden Zähne auf einer der gegenüberliegenden Fingerstangenhälften in die abwechselnden Zähne auf einer zweiten der gegenüberliegenden Fingerstangenhälften eingreifen und die abwechselnden rechteckigen Aussparungen die Polstangen aufnehmen, wobei jedes der Paare verbundener gegenüberliegender Fingerstangenhälften die Translatormodule in Längs- und Querrichtung an einem äußeren Ende jedes Translatormoduls oder zwischen den Segmenten der Module stützt.

5. Vernier-Permanentmagnetlineargenerator wie definiert in Anspruch 4, wobei die Fingerstangenhälften in Längsendstangen (94) und Querstützen (96) eingreifen, um die Steifigkeit des Translators zu erhöhen.

6. Vernier-Permanentmagnetlineargenerator wie definiert in Anspruch 3, wobei jeder der beiden Statoren eine Vielzahl von Kernabschnitten (100) umfasst, die der Vielzahl von Segmenten in den Translatormodulen entsprechen, wobei jeder Kernabschnitt 12 Schlitze mit einer Schlitzbreite sw aufweist, wobei zwischen jedem Schlitz ein Zahn mit einer Zahnbreite tw angeordnet ist.

7. Vernier-Permanentmagnetlineargenerator wie definiert in Anspruch 6 ferner umfassend Endplatten (102), die an den Seitenkanten jedes Kernabschnitts und an den Zwischenräumen zwischen benachbarten Kernabschnitten angebracht sind, wobei die Endplatten mit einer Rückplatte (104) in Eingriff stehen, um seitliche Steifigkeit zu gewährleisten, und die Rückplatte die Statoren an Statorstützen (68a, 68b) befestigt.

8. Vernier-Permanentmagnetlineargenerator wie definiert in Anspruch 7 ferner umfassend seitliche Stützstangen (104), die sich seitlich von den Endplatten durch Kanäle (106) in den Statorkernabschnitten erstrecken.

9. Vernier-Permanentmagnetlineargenerator wie definiert in Anspruch 8, bei dem die Endplatten in der Nähe jedes Zahns zwischen jedem Schlitz jedes Kernabschnitts vorgesehen sind und sich die seitlichen Stützstangen von jeder zweiten Endplatte vertikal an jedem Kernabschnitt erstrecken.

10. Vernier-Permanentmagnetlineargenerator wie definiert in Anspruch 6, wobei die aktive Längsausdehnung jedes Stators 2*xps beträgt und xps=11*xp.

11. Vernier-Permanentmagnetlineargenerator wie definiert in Anspruch 10, wobei ein Stator-Schlitz-/Zahnabstand sp durch sp/(3*Q)=xps/6 definiert ist, wobei Q ein Wert für eine ausgeglichene dreiphasige Wicklungsanzahl von Schlitzen pro Pol pro Phase ist.

12. Vernier-Permanentmagnetlineargenerator wie definiert in Anspruch 1, wobei der Translator an jedem Längsende eine Überlänge (59) über die Statoren hinaus aufweist und ein zweiter Teil der Vielzahl von Translatormodulen (55') an jedem Längsende des Translators ein nichtmagnetisches Material aufweist, das die Magnete in jedem Modul für einen Teil der Überlänge ersetzt.

13. Vernier-Permanentmagnetlineargenerator wie definiert in Anspruch 12, wobei der Teil der Überlänge einen längeren passiven Hub als den aktiven Hub des Translators zwischen den Statoren bereitstellt.

14. Vernier-Permanentmagnetlineargenerator wie definiert in Anspruch 1, wobei das Antriebselement einen Schwimmkörper (12) in einem Wellenenergiekonverter (10) umfasst und der Reaktionskörper mit dem Schwimmkörper in Eingriff steht, wobei der Reaktionskörper relativ zum Schwimmkörper statisch oder phasenverschoben schwingt.

## Revendications

1. Générateur linéaire à aimant permanent Vernier comprenant:
un transducteur (50) comportant
une pluralité de modules de translation (55) orientés dans un réseau vertical, au moins une partie de ladite pluralité de modules de translatrices comportant des aimants permanents avec un pas de pôle magnétique de translatrice xp;
des supports (66) au niveau des bords latéraux de la pluralité de modules de translation;
une tige (36) reliée aux supports pour la fixation à un élément d'entraînement (12), ledit élément d'entraînement faisant aller et venir le transducteur dans une direction longitudinale;
deux stators (52) supportés sur un corps de réaction (16) et ayant un pas de fente sp, lesdits stators étant espacés de manière opposée de la matrice verticale de modules de translation par un entrefer (61) et décalés d'une moitié du pas de fente sp, lesdits stators ayant une ouverture de fente so et une profondeur de fente sd, où so/sp est compris entre 0,4 et 0,8, et des enroulements de stator à fentes intégrales triphasés (53) avec un pas de pôle d'enroulement de stator à segment unique xps interagissant magnétiquement avec un champ magnétique induit par les aimants permanents;
dans lequel les stators utilisent la profondeur de fente sd pour créer des courants de fente générant des composantes harmoniques à des harmoniques impaires non divisibles par 3.

2. Générateur linéaire à aimant permanent Vernier tel que défini dans la revendication 1, dans lequel au moins une partie de la pluralité de modules de translation comprend chacun des lamelles d'acier électrique (62) engagées de manière opposée sur les aimants permanents (65).

3. Générateur linéaire à aimant permanent Vernier tel que défini dans la revendication 2, dans lequel les lamelles d'acier et les aimants permanents sont assemblés sur une barre polaire (84) en une pluralité de segments avec une pluralité d'aimants dans chaque segment.

4. Générateur linéaire à aimant permanent Vernier tel que défini dans la revendication 3, dans lequel la barre polaire a une section transversale quadrilatérale et comprend en outre une pluralité de paires de moitiés de barres à doigts opposées jointes (80a, 80b), chaque moitié de barre à doigts opposée ayant des dents rectangulaires alternées (90) et des reliefs rectangulaires (92), les dents alternées sur l'une desdites moitiés de barre à doigts opposées s'engageant avec les dents alternées sur une seconde desdites moitiés de barre à doigts opposées et les reliefs rectangulaires alternés recevant les barres polaires, chacune des paires de moitiés de barres à doigts opposées reliées entre elles supportant longitudinalement et transversalement les modules de translation à une extrémité extérieure de chaque module de translation ou entre les segments des modules.

5. Générateur linéaire à aimant permanent Vernier tel que défini dans la revendication 4, dans lequel les moitiés de barre à doigts s'engagent avec des barres d'extrémité longitudinales (94) et des supports transversaux (96) pour une rigidité accrue du transducteur.

6. Générateur linéaire à aimant permanent Vernier tel que défini dans la revendication 3, dans lequel chacun des deux stators comprend une pluralité de sections de noyau (100) correspondant à la pluralité de segments dans les modules de translation, chaque section de noyau comportant 12 fentes d'une largeur sw, avec une dent intermédiaire entre chaque fente d'une largeur tw.

7. Générateur linéaire à aimant permanent Vernier tel que défini dans la revendication 6, comprenant en outre des plaques d'extrémité (102) reliées aux bords latéraux de chaque section de noyau et aux espaces entre les sections de noyau adjacentes, les plaques d'extrémité étant engagées sur une plaque arrière (104) pour assurer la rigidité latérale, la plaque arrière fixant les stators aux supports de stator (68a, 68b).

8. Générateur linéaire à aimant permanent Vernier tel que défini dans la revendication 7, comprenant en outre des barres de support latérales (104) s'étendant latéralement à partir des plaques d'extrémité à travers des canaux (106) dans les sections de noyau du stator.

9. Générateur linéaire à aimant permanent Vernier tel que défini dans la revendication 8, dans lequel les plaques d'extrémité sont prévues à proximité de chaque dent entre chaque fente de chaque section de noyau et les barres de support latérales s'étendent à partir de chaque deuxième plaque d'extrémité verticalement sur chaque section de noyau.

10. Générateur linéaire à aimant permanent Vernier tel que défini dans la revendication 6, dans lequel la longueur longitudinale active de chaque stator est de 2*xps et xps=11*xp.

11. Générateur linéaire à aimant permanent Vernier tel que défini dans la revendication 10, dans lequel un pas de fente/dent de stator sp est défini par sp/(3*Q)=xps/6, où Q est une valeur pour un nombre équilibré de fentes par pôle par phase d'un ensemble d'enroulements triphasés.

12. Générateur linéaire à aimant permanent Vernier tel que défini dans la revendication 1, dans lequel le transducteur présente une longueur excédentaire (59) à chaque extrémité longitudinale au-delà des stators et une deuxième partie d' de la pluralité de modules transducteurs (55') à chaque extrémité longitudinale du transducteur comporte un matériau non magnétique remplaçant les aimants dans chaque module pour une partie de la longueur excédentaire.

13. Générateur linéaire à aimant permanent Vernier tel que défini dans la revendication 12, dans lequel la partie de la longueur excédentaire fournit une course passive plus longue que la course active du transducteur entre les stators.

14. Générateur linéaire à aimant permanent Vernier tel que défini dans la revendication 1, dans lequel l'élément d'entraînement comprend un corps flottant (12) dans un convertisseur d'énergie houlomotrice (10) et le corps de réaction s'engage avec le corps flottant, ledit corps de réaction étant statique ou oscillant en déphasage par rapport au corps flottant.
